Europäisches Patentamt

European Patent Office

Office européen des brevets

(11) Veröffentlichungsnummer: **0 221 397**
**B1**

(12) **EUROPÄISCHE PATENTSCHRIFT**

(45) Veröffentlichungstag der Patentschrift: **16.01.91**

(21) Anmeldenummer: **86114080.4**

(22) Anmeldetag: **10.10.86**

(51) Int. Cl.⁵: **G 11 B 23/113**

(54) **Automatische Maschine für das Laden von Magnetband in eine Kassette.**

(30) Priorität: **11.10.85 IT 2245485**

(43) Veröffentlichungstag der Anmeldung:
**13.05.87 Patentblatt 87/20**

(45) Bekanntmachung des Hinweises auf die
Patenterteilung:
**16.01.91 Patentblatt 91/03**

(84) Benannte Vertragsstaaten:
**AT BE CH DE ES FR GB LI**

(56) Entgegenhaltungen:
**DE-A-2 205 818**
**GB-A-2 021 838**
**US-A-4 341 362**
**US-A-4 497 454**

(73) Patentinhaber: **ROBOTECNICA S.r.l.**
**Via Clerici, 2/4**
**20099 Sesto San Giovani (MI) (IT)**

(72) Erfinder: **Bosco, Angelo**
**Via Kennedy, 27**
**I-20097 San Donato Milanese (IT)**
Erfinder: **Magnaghi, Edgardo**
**Via Veneto 11/3b San Bovio**
**I-20068 Peschiera Borromeo (IT)**
Erfinder: **Parravicini, Marco**
**Via Curiel 6**
**I-20037 Paderno Dugnano (IT)**

(74) Vertreter: **Vogl, Leo, Dipl.-Ing.**
**AEG Aktiengesellschaft Patent-und**
**Lizenzwesen Theodor-Stern-Kai 1**
**D-6000 Frankfurt am Main 70 (DE)**

Courier Press, Leamington Spa, England.

**Beschreibung**

Die vorliegende Erfindung betrifft eine automatische Maschine für das Laden von Magnetband in eine Kassette.

Bekannt sind Maschinen zur Aufspulung von Magnetband in leere Kassetten. Solche Maschinen arbeiten, indem sie Magnetband auf eine Kassette laden, während gleichzeitig eine andere Kassette für die eigentliche Bearbeitung vorbereitet wird, in einer zu der sich in Bearbeitung befindlichen Kassette benachbarten Position.

Eine solche Art von Maschine weist Problem auf, die in Verdrehung des eingespeisten Magnetbands und damit Komplikationen bei der Ladung, sowie in der Anordnung der verschiedenen Elemente, aus der sich die Maschine zusammensetzt. Außerdem ergibt sich ein reduzierter kontinuierlicher Arbeitsablauf durch die begrenzte Menge der Kassetten, die aufgelegt werden können.

Es treten weiterhin Schäden an Kassetten und Band auf, die auf den Kontakt der magnetisierbaren Oberfläche mit den metallischen Oberflächen der Führungen und Rückführungen der Vorrichtungen, die die Spannung des Bandes regulieren zurückzuführen sind.

Aus der US Patentschrift 4 497 454 ist eine automatische Kassettenlademaschine mit einer pneumatischen Spannvorrichtung und einer Kassettenbearbeitungsstation gemäß dem Oberbegriff des Hauptanspruches bekannt, bei der zur Führung des Magnetbandes weitere Führungselemente verwendet werden. Dies erhöht die Gefahr eines Kontaktes des Magnetbandes mit metallischen Oberflächen.

Zweck der vorliegenden Erfindung ist es, die zitierten Nachteile zu vermeiden und eine Maschine zu schaffen, die in der Lage ist, Magnetband auf leere Kassetten ohne Unterbrechungen der Kontinuität zu laden, wobei plötzliche Verdrehungen des Bandes auf zu kurzen Abschnitten vermieden werden sollen und die außerdem dergestalt ist, daß der magnetisierbare Teil des Bandes nicht in Kontakt mit den metallischen Oberflächen der Führungen kommt.

Weiterer Zweck der vorliegenden Erfindung ist, daß zwischen Ausgang einer Bandspannvorrichtung und dem Eingang in die Kassette die Entfernung minimal und die Neigung des Bandes in Bezug auf den Eingangsschlitz der Kassette optimal ist.

Ein weiterer Zweck der vorliegenden Erfindung ist die größtmögliche Vereinfachung jeglicher Ladeoperation, wobei die erforderlichen Zeiten möglichst klein gehalten werden sollen. Für diese Zwecke wurde gemäß der vorliegenden Erfindung eine automatische Maschine für das Laden von Magnetband auf Kassette realisiert, die die im Kennzeichen des Hauptanspruches beschriebenen Merkmale aufweist.

Die Merkmale und Vorteile der Erfindung werden nachfolgend an Hand beiliegender Zeichnung beschrieben:

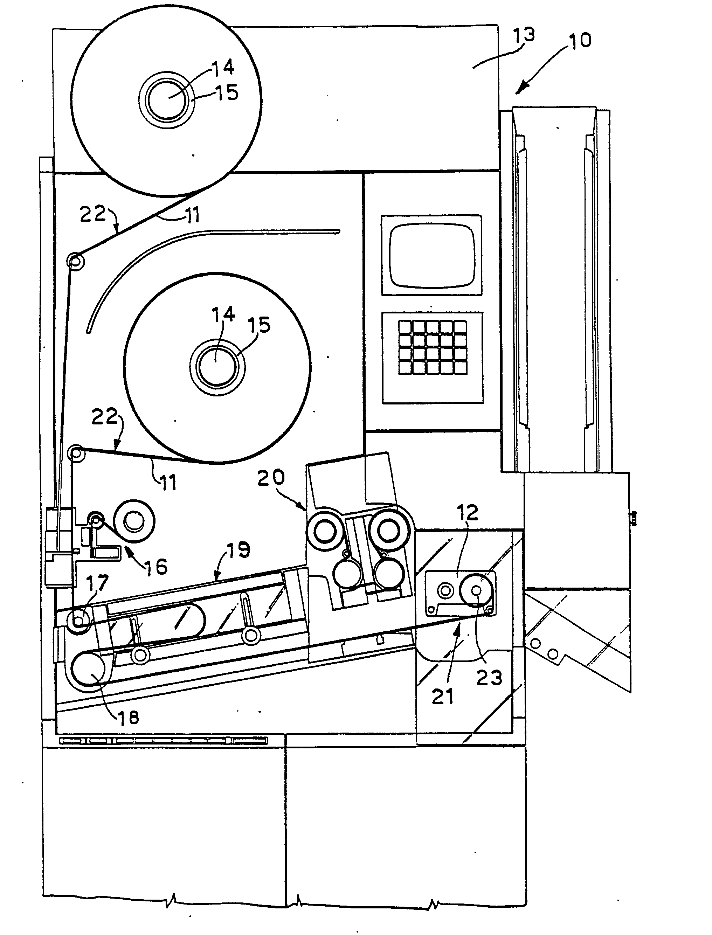

Die Zeichnung zeigt eine Frontansicht der Maschine.

In der Zeichnung ist mit 10 die automatische Maschine zum Laden von Magnetband 11 in Kassette 12 bezeichnet, die gemäß der Erfindung aufgebaut ist. Die Maschine 10 besteht aus einem Gehäuse 13, das an der Vorderseite zwei Naben 14 aufweist, auf denen Spulen 15 für die Einspeisung des Magnetbandes 11 befestigt werden. Die Naben 14 mit den Spulen 15 sind am oberen Teil des Gehäuses 13 untergebracht, während unter ihnen seitlich eine Vorrichtung 16 vorgesehen ist, die die Aufgabe hat, das Band 11 einer der Spulen 15 abzuchneiden, wenn es während des Bearbeitung zu Ende geht, um es mit dem Band der anderen Spule 15 zu verbinden. Unter den Naben 14 und der Vorrichtung 16 sind Kehrrollen 17 und 18 und eine pneumatische Vorrichtung vorgesehen, die gemeinsam die Aufgabe erfüllen, die Spannung des Bandes 11 konstant zu halten, die nachfolgend als Spanner 19 bezeichnet, wird.

Die schräge Stellung des Spanners 19, um 10° gegenüber der Horizontalen geneigt, dient außerdem dazu, die Distanz zwischen der Kehrrolle 18, die auch als Zählrad für die Menge des vorbeilaufenden Bandes dient, und der Kassette 12 möglichst klein zu halten.

Mit der speziellen Stellung des Spanners 19 werden Vibrationen im Band zwischen der Kehrrolle 18 und der Kassette 12 vermieden, so daß das Band um 180° um die Kehrrolle 18 gewickelt werden kann, was einen guten Griff und Sicherheit für ein exaktes Zählen garantiert.

Seitlich am Spanner 19, an der der Vorrichtung 16 gegenüberliegenden Seite ist ein Station 20 vorgesehen, an der das Band 11 mit der Kassette 12 verbunden wird. Die Kassette 12 befindet sich in einer Bearbeitungsstation 21, die wie die Schnittvorrichtung 16 aufgebaut ist und die hauptsächlich aus einem doppelten Aufspulmechanismus (nicht dargestellt) besteht. Dieser doppelte Mechanismus sorgt abwechselnd für die Vorbereitung einer Kassette für einen Zyklus der Bearbeitung und dazu, eine festgesetzte Menge band im Innern einer anderen, schon präparierten Kassette aufzuspulen.

Außerdem ist gemäß der Erfindung die Bearbeitungsstation 21 so angeordnet, daß die Kassette 12, die mit Magnetband 11 gefüllt werden soll, sich hauptsächlich in horizontaler Lage befindet. Es ist darauf hinzuweisen, daß die Anordnung der verschiedenen Elemente, aus denen sich die Maschine 10 zusammensetzt, dazu beiträgt, alle Funktionen zu optimieren.

Der Spanner 19 ist mit seiner Eingangsöffnung der Seite des Gehäuses zugewandt, welche der Bandeinführung öffnung der Bearbeitung station 21 gegenüberliegt und verhindert einen Kontakt der Magnetbandoberfläche 22 mit metallischen Oberflächen.

Die Neigung des Spanners 19 von 10° gegenüber der-Horizontalen bewirkt, daß die Distanz zwischen Spanner 19 und Bearbeitungsstation 21 möglichst klein gehalten wird, das Band 11 kann in die Kassette 12 eintreten, ohne mit den Rädern der Eingangsspalte 23 in Kontakt zu kommen. Die Maschine kann sowohl für automatischen Ablauf als auch für manuelle Steuerung hergestellt werden, wobei die der automatischen Version eine logische Kontrolleinheit (nicht dargestellt) die nötigen Anweisungen erteilt, auf der Basis von Daten, die von auf dieser Maschine angebrachten Steuerungen abgenommen werden, die außerdem zur Diagnose herangezogen werden. Auf diese Weise wird die Wartung und Reparatur erleichtert.

Zusammenfassend läßt sich sagen, daß sich mit der Maschine gemäß der vorliegenden Erfindung eine verbesserte Leistung erzielen läßt und in der Praxis bietet sich die Möglichkeit ohne Unterbrechungen zu arbeiten, mit kürzesten Leerzeiten im Vergleich zu anderen Maschinen. Dies wird bewirkt durch die Einfachheit und Schnelligkeit, die sie in den Arbeitsabläufen des Ladens und des Wechsels des Bandes und der Kassetten erlaubt.

## Patentansprüche

1. Automatische Maschine zum Laden von Magnetband in Kassetten, mit mindestens einer Spulenträgernabe (14) für das Abspulen von Magnetband, einer Vorrichtung zum Schneiden und Verbinden des Magnetbandes (20), einer Arbeitsstation (21), in die die Kassetten so eingespeist werden, daß ihre mit Öffnungen versehene Seite nach unten und horizontal zu liegen kommt sowie einer mit Unterdruck arbeitenden pneumatischen Spannvorrichtung (19) mit einer Umlenkrolle (18), über die das Magnetband in die Arbeitsstation (21) geführt wird, wobei die Eingangsöffnung der Spannvorrichtung (19) einer Seite des Gehäuses zugewandt ist, dadurch gekennzeichnet, daß die Spannvorrichtung (19) an der Vorderseite des Gehäuses schräg angebracht und um 10°±1° gegenüber der Horizontalen geneigt ist und daß deren Eingangsöffnung der der Bandeinführungs öffnung der Arbeitsstation (21) gegenüberliegenden Seite zugewandt ist und daß das Magnetband durch die Umlenkrolle (18) um näherungsweise 180° umgelenkt wird und näherungsweise parallel zur Unterseite der Spannvorrichtung (19) laufend ohne von weiteren Unlenk- oder Spannvorrichtungen geführt zu werden, direct in die zu ladende Kassette eintritt.

2. Maschine gemäß Anspruch 1, dadurch gekennzeichnet, daß sie zwei Spulenträgernaben (14), erste Verbindungs- und Schnittvorrichtungen (16) für das Magnetband unterhalb von zwei Naben (14), Mittel zur Führung und Rückführung des besagten Bandes, und zweite Verbindungs- und Schnittvorrichtungen (20) für das Band (11), die zwischen der besagten Unterdruckvorrichtung (19) und der Arbeitstation (21) liegen, aufweist.

3. Maschine gemäß Anspruch 2, dadurch gekennzeichnet, daß besagte erste Verbindungs- und Schnittvorrichtungen (16) für das Magnetband (11) zwischen den zwei Naben (14) und der Spannvorrichtung (19) liegen, und dazu dienen, abwechselnd das Endstück des Bandes von einer Spule mit dem Anfangsstück des Bandes der anderen Spule zu verbinden.

4. Maschine nach den Ansprüchen 1 bis 3, dadurch gekennzeichnet, daß sie mit einer Logikeinheit für Kontrolle und Diagnose ausgerüstet ist.

## Revendications

1. Machine automatique pour charger une bande magnétique dans des cassettes, comprenant au moins un moyeu support de bobine (14) servant à dévider une bande magnétique, un dispositif servant à couper et à raccorder la bande magnétique (20), un poste de traitement (21) dans lequel les cassettes sont mises en place de manière que leur côté muni d'une ouverture soit dirigé vers le bas et vienne se placer à l'horizontale, ainsi qu'un dispositif tendeur pneumatique (19) travaillant par dépression, qui comprend un rouleau de renvoi (18) par l'intermédiaire duquel la bande magnétique est envoyée dans le poste de traitement (21), l'ouverture d'entrée du dispositif tendeur (19) étant dirigée vers un côté du carter, caractérisée en ce que le dispositif tendeur (19) est disposé obliquement contre la face avant du carter, et est incliné de 10°±1° par rapport à l'horizontale, en ce que l'ouverture d'entrée de ce dispositif est dirigé vers le côté qui est à l'opposé de l'ouverture d'entrée de la bande de la station de traitement (21), et en ce que la bande magnétique est renvoyée d'environ 180° par un rouleau de renvoi (18) et pénètre directement dans la cassette à charger, en défilant à peu près parallèlement à la face inférieure du dispositif tendeur (19) sans être guidée par d'autres dispositifs de renvoi ou de tension.

2. Machine selon la revendication 1, caractérisée en ce qu'elle présente deux moyeux supports de bobines (14), des premiers dispositifs de raccordement et de coupe (16) de la bande magnétique placés au-dessous de deux moyeux (14), des moyens servant à guider et renvoyer ladite bande, et des deuxièmes dispositifs de raccordement et de coupe (20) de la bande (11), qui se trouvent entre ladite dispositif à dépression (19) et la station de traitement (21).

3. Machine selon la revendication 2, caractérisée en ce que lesdits premiers dispositifs de raccordement et de coupe (16) de la bande magnétique (11) se trouvent entre les deux moyeux (14) et le dispositif tendeur (19) et servent à raccorder en alternance la partie finale de la bande d'une bobine à la partie initiale de la bande de l'autre bobine.

4. Machine selon les revendications 1 à 3, caractérisée en ce qu'elle est équipée d'une unité logique pour la commande et le diagnostic.

## Claims

1. Automatic machine, for the loading of magnetic tape into cassettes, with at least one reel carrier hub (14) for the unreeling of magnetic tape, a device for the cutting and splicing of the magnetic tape (20), a work station (21), into which the cassettes are so fed that their side provided with openings comes to lie downwardly and horizontally as well as with a pneumatic clamping device (19), which operates at underpressure, with a deflecting roller (18), by way of which the magnetic tape is led into the work station (21), wherein the entry opening of the clamping device (19) faces one side of the housing, characterised thereby, that the clamping device (19) is mounted obliquely at the front side of the housing and inclined at 10°±1° to the horizontal and that its entry opening faces the side opposite the tape introduction opening of the work station (21) and that the magnetic tape is deflected by the deflecting roller (18) through approximately 180° and enters directly into the cassette to be loaded while running approximately parallelly to the underside of the clamping device (19) without being guided by further deflecting or clamping devices.

2. Machine according to Claim 1, characterised thereby, that it displays two reel carrier hubs (14), first splicing and cutting devices (16) for the magnetic tape underneath two hubs (14), means for the guiding and return of the said tape and second slicing and cutting devices (20) for the tape (11), which lie between the said underpressure device (19) and the work station (21).

3. Machine according to Claim 2, characterised thereby, that said first splicing and cutting devices (16) for the magnetic tape (11) lie between the two hubs (14) and the clamping device (19) and serve to splice alternately the end piece of the tape from one reel with the starting piece of the tape from the other reel.

4. Machine according to the Claims 1 to 3, characterised thereby, that it is equipped with a logic unit for checking and diagnosis.